Europäisches Patentamt

European Patent Office

Office européen des brevets

Veröffentlichungsnummer: **0 309 790**

**A1**

## EUROPÄISCHE PATENTANMELDUNG

Anmeldenummer: 88114637.7

Int. Cl.⁴ **F16B 12/24**

Anmeldetag: 08.09.88

Priorität: 28.09.87 DE 8713028 U

Veröffentlichungstag der Anmeldung:
05.04.89 Patentblatt 89/14

Benannte Vertragsstaaten:
**AT BE CH DE ES FR GB GR IT LI LU NL SE**

Anmelder: **Adolf Würth GmbH & Co. KG
Maienweg 10
D-7118 Künzelsau(DE)**

Erfinder: **Schurr, Karl-Heinz
Heilbronner Strasse 21
D-7320 Göppingen(DE)**

Vertreter: **Patentanwälte RUFF, BEIER und
SCHÖNDORF
Neckarstrasse 50
D-7000 Stuttgart 1(DE)**

Dübel.

Ein Dübel zum unlösbaren Verbinden zweier Bauteile enthält zwei Endabschnitte, die mit sägezahnförmigen Ringwulsten (13) versehen sind. Der Dübel wird zum Eintreiben in Bohrungen verwendet, die einen etwas geringeren Durchmesser aufweisen. Der Dübel hält in den Bohrungen der Bauteile so fest, daß diese während des Abbindens des Klebers nicht fixiert zu werden brauchen.

FIG.1

EP 0 309 790 A1

## Dübel

Die Erfindung betrifft einen Dübel zum Verbinden von Holz-und oder Kunststoffbauteilen durch Eingreifen in Bohrungen der zu verbindenden Bauteile.

Für diesen Zweck werden bislang Dübel verwendet, die aus Holz bestehen und eine Längsriffelung aufweisen. Die Dübel ermöglichen nur mit Hilfe eines zusätzlichen Klebstoffs in Form von zwischen die Dübel und die Bohrungswandung eingebrachtem Leim oder dergleichen eine wenigstens für eine gewisse Zeit unlösbare Verbindung. Nach dem Aufbringen des Klebstoffs muß jedoch die Verbindung für eine gewisse Zeit fixiert werden, bis der Klebstoff abgebunden hat. Dies bedeutet einen beachtlichen Zeitaufwand.

Der Erfindung liegt die Aufgabe zugrunde, einen möglichst einfach aufgebauten Dübel zu schaffen, der die Herstellung von unlösbaren Verbindungen mit geringem Aufwand ermöglicht.

Zur Lösung dieser Aufgabe ist erfindungsgemäß ein Dübel vorgesehen, der ein geringes Durchmesserübermaß gegenüber den Bohrungen der zu verbindenden Bauteile aufweist, und in jedem zum Eingriff in die Bohrungen bestimmten Endabschnitt als kreiszylindrischer Körper ausgebildet ist und mit mehreren sägezahnartig ausgebildeten Umfangsringwulsten versehen ist.

Durch diese Ausbildung des Dübels wird es möglich, zwei Bauteile aus Holz und/oder Kunststoff durch einfaches Eintreiben des Dübels in die Bohrung des jeweiligen Bauteils auf Dauer unlösbar miteinander zu verbinden. Der Dübel hält die Verbindung so fest zusammen, daß die Verbindung zum Abbinden des Leims nicht fixiert zu werden braucht. Dadurch wird der Zeitaufwand und der Arbeitsaufwand verringert. Unter bestimmten Umständen kann sogar auf den Leim vollständig verzichtet werden.

Insbesondere günstig ist es, wenn in Weiterbildung der Erfindung der Dübel als Massivkörper ausgebildet ist.

In Weiterbildung kann vorgesehen sein, daß die Ringwulste an mindestens einer Stelle ihres Umfangs durch eine axial verlaufende Nut unterbrochen sind. Diese Nut kann zum Abführen des Leims bzw. Klebers dienen.

In Weiterbildung der Erfindung kann vorgesehen sein, daß der Dübel symmetrisch zu einer ihn axial halbierenden Mittelebene ausgebildet ist. Dies erleichtert die Handhabung des Dübels, da er in beiden möglichen Richtungen verwendet werden kann.

Der Dübel kann nach einem weiteren Merkmal zylindrisch ausgebildet sein, d. h. zur Verbindung von Bauteilen mit zwei gleichachsig fluchtenden Bohrungen verwendet werden. Es ist jedoch ebenfalls möglich, den Dübel als Winkeldübel auszubilden, so daß er zur Winkelverbindung von zwei Bauteilen verwendbar ist. Üblicherweise sind dabei Winkel von 90°.

Die Erfindung schlägt vor, daß der Dübel aus Kunststoff besteht, insbesondere aus Kunststoff gespritzt ist. Möglich sind jedoch auch Dübel aus Metall und Holz.

Für eine besonders große Festigkeit kann vorgesehen sein, den Dübel durch ein eingelegtes Metallteil zu verstärken.

Die langsam ansteigenden Flanken der Zähne der Ringwülste weisen einen Flankenwinkel auf, der vorzugsweise im Bereich von etwa 15° bis etwa 30° liegt.

Bei den üblichen Abmessungen der Bohrungen und der Dübel kann erfindungsgemäß vorgesehen sein, daß das Durchmesserübermaß etwa 0,5 mm beträgt.

Die Erfindung schlägt ebenfalls ein Verfahren zum Verbinden zweier mit Bohrungen versehene Holz- und/oder Kunststoffbauteile mit einem Dübel vor, bei der zunächst ein Dübel, wie er hierin beschrieben ist, in die Bohrung des einen Bauteils eingetrieben und anschließend die beiden Bauteile derart aufeinanderzu geschoben werden, daß der überstehende Teil des Dübels in die Bohrung des jeweils anderen Bauteils eingetrieben wird. Vor dem Einbringen des Dübels kann ggf. Leim in die Bohrungen eingebracht werden.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 eine Längsansicht eines Dübels nach einer ersten Ausführungsart;

Fig. 2 eine Stirnansicht des Dübels der Fig. 1;

Fig. 3 eine Stirnansicht einer geänderte Ausführungsform;

Fig. 4 eine Längsansicht einer dritten Ausführungsform eines von der Erfindung vorgeschlagenen Dübels;

Fig. 5 die Stirnansicht des Dübels der Fig. 4;

Fig. 6 vergrößert einen Teil des Dübels der Fig. 4;

Fig. 7 einen Schnitt durch eine der Fig. 1 entsprechende Ausführungsform mit eingelegtem Metallteil.

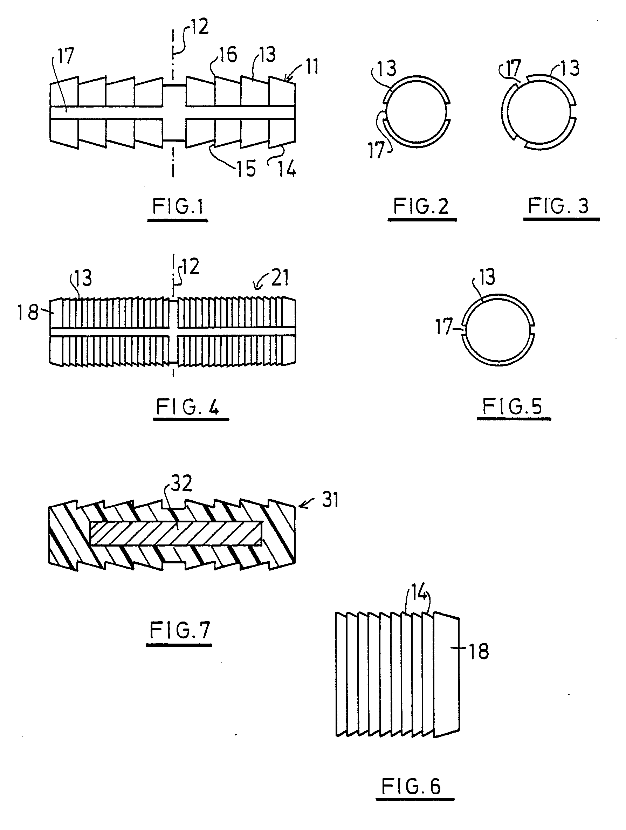

Der in Fig. 1 dargestellte Dübel zum Verbinden zweier Bauteile ist als etwa kreiszylindrischer Körper 11 ausgebildet, der symmetrisch zu einer strichpunktiert angedeuteten Mittelebene 12, die senkrecht zur Längsachse des Dübels steht, symmetrisch ausgebildet ist. Um den etwa zylindrischen Körper herum verlaufen in jeder Hälfte vier Ringwulste 13, die im Querschnitt sägezahnförmig ausgebildet sind. Der Winkel der vom Ende des Dübels zu dessen Mitte langsam ansteigenden Flanke 14 beträgt rund 15° gegenüber der Längsachse des Dübels. Begrenzt ist jeder Ringwulst 13 durch eine Fläche 15, die in einer zur Längsachse des Dübels senkrechten Ebene liegt. Auf diese Weise werden scharfe Kanten 16 gebildet, die das Einschieben des Dübels in eine Bohrung erleichern, seine Herausziehen aber unmöglich machen. Die "Zähne" des Sägezahnprofils sind also derart angeordnet, daß sie das Eintreiben des Dübels in eine Bohrung ermöglichen, das Herausziehen aber verhindern.

Wie sich aus Fig. 2 ergibt, die eine Stirnansicht des Dübels darstellt, sind die Ringwulste 13 an zwei Stellen durch je eine axiale Längsnut 17 unterbrochen, wobei die beiden Längsnuten diametral angeordnet sind. Die Längsnuten gehen im übrigen auch aus Fig. 1 hervor.

Der Durchmesser des Dübels im Bereich der Kanten 16 aller Ringwulste 13 ist gleich. Der Dübel ist zum Einsetzen in eine Bohrung gedacht, deren Durchmesser kleiner ist als der Durchmesser der Kanten 16 der Ringwulste 13, vorzugsweise um einen Betrag von etwa 0,5 mm.

Bei der Ausführungsform der Fig. 3 sind die Ringwulste 13 durch insgesamt drei axiale Längsnuten 17 unterbrochen. Die Längsnuten 17 sind derart ausgebildet, daß ihr Nutgrund mit dem Durchmesser des Dübels an der engsten Stelle der Ringwulste 13 übereinstimmt.

Bei der Ausführungsform der Fig. 1 sind auf jeder Seite der Mittelebene 12 am Dübel insgesamt vier Ringwulste vorgesehen. Der Flankenwinkel beträgt etwa 15°. Bei der Ausführungsform nach Fig. 4 sind zu beiden Seiten der Ebene 12 eine größere Anzahl von Ringwulsten 13 vorhanden, so daß eine größere Zahl von scharfen Kanten 16 gebildet wird. Die beiden äußeren Ende 18 des Dübels 21 der Fig. 4 sind angefast und weisen eine dem Dübel 11 der Fig. 1 ähnliche Form auf. Sie sollen das Einschieben des Dübels in die Bohrung erleichtern.

Wie sich aus Fig. 5 ergibt, ist auch bei der Ausführungsform der Fig. 4 jeder Ringwulst 13 durch zwei axiale Längsnuten 17 unterbrochen.

Aus der Fig. 6 ergibt sich, daß der Flankenwinkel, d. h. der Winkel, den die ansteigenden Flanken 14 der Ringwulste 13 mit der Längsachse des Dübels 21 bilden, etwas größer ist als bei der Ausführungsform der Fig. 1 - 3. Er beträgt etwa 25 - 30°. Das äußere Ende 18 ist etwas flacher angefast, beispielsweise mit einem Winkel von rund 15°.

Fig. 7 zeigt einen Längsschnitt durch einen dem Dübel 11 der Fig. 1 entsprechenden Dübel 31. Der Dübel 31 besteht wie die übrigen Dübel aus Kunststoff, insbesondere ist er als Kunststoffspritzteil ausgebildet. Der Dübel 31 weist einen Verstärkungskern aus einem eingelegten Metallbolzen 32 auf, der sich über einen Teil der Länge des Dübels 31 erstreckt. Bei allen dargestellten Dübeln erstrecken sich die Ringwulste 13 bis kurz vor die Mittelebene 12.

Bei der Ausführungsform nach Fig. 1 - 3 und 7 beträgt die Tiefe der Einschnitte zwischen den Ringwulsten 13 etwa 1 mm, bei der Ausführungsform nach Fig. 4 - 6 dagegen ca. 04, - 0,5 mm.

Während die dargestellten Figuren 1 - 7 Dübel zeigen, die als geradlinige Dübel zum Verbinden von Bauteilen mit fluchtenden Bohrungen dienen, ist es ebenfalls möglich, den Dübel als Winkeldübel auszubilden, bei dem die beiden mit Ringwulsten 13 versehenen Teile des Dübels einen Winkel von beispielsweise 90° miteinander einschließen. Auf diese Weise ist die Verbindung von winkligen Teilen miteinander möglich.

Der Dübel nach der Erfindung wird derart verwendet, daß er bis in den Bereich der Mittelebene 12 in eine Bohrung eingepreßt wird. Anschließend wird das mit ihm versehene Bauteil so gegen ein anderes Bauteil relativ verschoben, daß der überstehende Teil des Dübels in die Bohrung des entsprechenden anderen Bauteils eingepreßt wird. Dadurch entsteht eine praktisch unlösbare Verbindung, die nicht bis zum Aushärten des Klebers bzw. Leims fixiert werden muß. Der Dübel hält aufgrund seiner Form und seiner Abmessung im Vergleich zu der Bohrung die Verbindung so fest zusammen, daß dies ausreicht, um ein Abbinden des Klebers ohne Fixierung zu ermöglichen. Unter Umständen kann auch auf die Verwendung von Leim vollständig verzichtet werden.

**Ansprüche**

1. Dübel zum Verbinden von Holz- und/oder Kunststoffbauteilen durch Eingreifen in Bohrungen der zu verbindenden Bauteile, dadurch gekennzeichnet, daß der Dübel in jedem der zum Eingriff in die Bohrungen bestimmten Endabschnitte als kreiszylindrischer Körper (11) ausgebildet ist und mit mehreren sägezahnartig ausgebildeten Umfangsringwulsten versehen ist.

2. Dübel nach Anspruch 1, dadurch gekennzeichnet, daß er als Massivkörper (11) ausgebildet ist.

3. Dübel nach Anspruch 1 oder 2, dadurch gekennzeichnet, daß die Ringwulste (13) an mindestens einer Stelle ihres Umfangs durch eine axial verlaufende Längsnut (17) unterbrochen sind.

4. Dübel nach einem der vorhergehenden Ansprüche, dadurch gekennzeichnet, daß er symmetrisch zu einer ihn axial halbierenden Mittelebene (12) ausgebildet ist.

5. Dübel nach einem der vorhergehenden Ansprüche, dadurch gekennzeichnet, daß er zylindrisch ausgebildet ist.

6. Dübel nach einem der Ansprüche 1 - 4, dadurch gekennzeichnet, daß er als Winkeldübel ausgebildet ist.

7. Dübel nach einem der vorhergehenden Ansprüche, dadurch gekennzeichnet, daß er aus Kunststoff besteht, insbesondere ein Kunststoffspritzteil ist.

8. Dübel nach einem der vorhergehenden Ansprüche, dadurch gekennzeichnet, daß er durch ein eingelegtes Metallteil (32) verstärkt ist.

9. Dübel nach einem der vorhergehenden Ansprüche, dadurch gekennzeichnet, daß die Flankenwinkel der Ringwulste (13) zwischen etwa 15 und etwa 30° liegen.

10. Dübel nach einem der vorhergehenden Ansprüche, dadurch gekennzeichnet, daß er zum Eintreiben in Bohrungen mit einem Durchmesser bestimmt ist, dem gegenüber der Dübel ein Durchmesserübermaß aufweist.

11. Dübel nach Anspruch 10, dadurch gekennzeichnet, daß das Durchmesserübermaß etwa 0,5 mm beträgt.

12. Verfahren zum Verbinden zweier mit Bohrungen versehener Holz- und/oder Kunststoffbauteile mit einem Dübel (11, 21, 31), dadurch gekennzeichnet, daß ein Dübel (11, 21, 31) nach einem der vorhergehenden Ansprüche in die Bohrung des einen Bauteils eingetrieben und anschließend das andere Bauteil auf den Dübel (11, 21, 31) aufgeschoben wird, so daß dieser in die Bohrung des zweiten Bauteils eingetrieben wird.

FIG.1

FIG.2

FIG. 3

FIG. 4

FIG.5

FIG.7

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 169 371 (C.J. TURNER et al.) <br> * Gesamtes Dokument * | 1-5,7 | F 16 B 12/24 |
| A |  | 9-12 | |
|  | --- | | |
| X | DE-U-8 316 308 (W. FISCHER) <br> * Ansprüche; Figur; Seite 7, letzter Absatz * | 1-5,10-12 | |
| A |  | 7,9 | |
|  | --- | | |
| X | US-A-3 883 258 (K.E. HEWSON) <br> * Figuren 2-5; Zusammenfasung * | 1-5,7 | |
| A |  | 9-12 | |
|  | --- | | |
| X | DE-A-3 304 975 (W. FISCHER) <br> * Anspruch; Zusammenfassung; Figur * | 1,2,5,7 | |
| A |  | 8-12 | |
|  | --- | | |
| A | DE-A-2 311 808 (BOGERYDS MÖBLER AB) <br> * Figur 1 * | 6 | |
|  | ----- | | |

**RECHERCHIERTE SACHGEBIETE (Int. Cl.4)**

F 16 B 12/00

Der vorliegende Recherchenbericht wurde für alle Patentansprüche erstellt

| Recherchenort | Abschlußdatum der Recherche | Prüfer |
|---|---|---|
| BERLIN | 19-12-1988 | SCHAEFFLER C.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)